# EUROPEAN PATENT APPLICATION

(11) **EP 4 640 395 A1**
(43) Date of publication of application: **29.10.2025**
(21) Application number: 24171605.9
(22) Date of filing: 22.04.2024
(51) Int. Cl.: B29C 33/02

(54) **STATIC PUNCTUAL OR REGIONAL HEATING DEVICE**

(71) Applicant: INCOE CORPORATION, Auburn Hills, MI 48326 (US)
(72) Inventor: Greb, Scott, Washington Township, 48094 (US); Jörg, Toni, 63762 Großostheim (DE); Striegel, Christian, 63512 Hainburg (DE)
(74) Representative: 2K Patentanwälte Blasberg Kewitz & Reichel

(57) **Abstract**

Injection mold comprising an injection mold cavity wall, comprising one or more heating devices for locally heating the injection mold or mold insert cavity wall,wherein the heating device is selected from one or more of the following: infrared heating device, laser heating device, arc heating device, induction heating device and wherein a section of the heating devices emitting the heat is spaced apart from the mold cavity wall when emit-ting the heat.

## Description

### Field of the Invention

The invention relates to a device for injection molding of injection molded parts from material suitable for injection molding, with at least one first mold part, preferably installed in a fixed position, at least one second mold part, preferably movable, which can be adjusted towards and away from the first mold part, a cavity being formed between the two mold parts in the shape of the injection molded part to be produced, a heat source for heating locally the wall of the mold part in the region of the cavity where defects are expected, flow support or surface optimization is needed and, tempering or cooling lines for cooling the heated wall area of the cavity is applied.

Typically, injection molding machines are connected to hot runner-systems which are again in connection with the mold. The molten plastic is pressed from the injection molding system via the hot runner-systems into the mold. In general, the hot runner-system, the injection molding machines and the molds are manufactured by different manufactures. Based on predefined interfaces these components work together in the injection molding process.

The hot runner system comprises one or more manifolds having one inlet nozzle connected to the injection molding machine, one or more manifolds and one or more nozzles without actuator or with actuator, and heating elements.

Such devices for injection molding of parts made of plastic or also of metal are known in the prior art. Particularly in the case of injection molded parts that are to be given a high-gloss surface, it is known that a corresponding wall of the cavity in which the injection molded part is formed is combined with a heater. This makes it possible to heat the corresponding wall of the cavity before the injection molding process or during the injection molding process in order to achieve a corresponding influence on the melt and thus on the surface of the molded part. In order not to prolong the injection cycle excessively due to the additional heating, an additional cooling can be provided which serves to subsequently cool the heated wall of the cavity before the molded part is removed from the cavity by opening the mold.

In the prior art, it is known that a weld line is formed during the injection of moldings e.g. by parting the melt and joining the melt behind a barrier. This appearance of the weld line is undesirable and should be avoided.

The documents JP 2007 223168 A, DE102006039780A1, EP000001728411B1, DE000006743799T1JP 2009 226778 A disclose heating devices in the field of injection molding machines, which try to solve the problem mentioned above.

Based on the prior art described at the beginning, the invention is based on the task of creating a device of the type in which the appearance of a weld line on the molded part is at least largely avoided with little effort and without significantly impairing the injection cycle, or in which partial heating, is required for other reasons e.g. of thinner flow paths, thin walls, ribs, bosses or other technical areas.

### Summary of Invention

The problem is solved by an injection mold according to the claims. The injection mold comprises an injection mold cavity wall, comprising one or more heating devices for locally heating the injection mold or mold insert cavity wall. Locally in this context means that not a complete area of the cavity is heated but only spots in the range of 0,001% to 10% of the mold having preferably different shapes. However only small spots are heated in different shapes to enable a punctual and selective heating and also being effective with respect to the heating and cooling cycle. The shapes can be longitudinal, circular, rectangular etc. The area which is locally heated can be from a few mm2 to 100cm2 . Compared to standard heating approaches where a large area of the injection mold cavity wall is heated, the claimed approach only heats a limited small area, having clearly defined borders.

In the context of the invention the heating device is selected from one or more of the following: infrared heating device, laser heating device, arc heating device, induction heating device, heat pipe, with Light or LED-light heating device, preferably blue LED-Light heating device, microwave heating device, spot heat cartridge device and wherein a section of the heating devices emitting the heat is spaced apart from the mold cavity wall when emitting the heat. Spaced apart in this context means that the heating device which emits the heat or the section of the heating device emitting the heat is not in contact with the mold cavity wall. This space has an isolation function. By having no contact with the mold cavity wall it is omitted that after switching of the heating device the remaining heat of the heating device is transferred into the mold cavity wall. The control of the heating process is improved by having a defined distance. This way the standard cooling of the mold is able to extract the rest heat without elongating the cycle.

In a possible embodiment also temperature sensors can be located in the heating device or the cavity wall, to control the heating elements and the heat transferred into the cavity wall. The control of the heating process is could be done by a timer or the reached temperature in the concerned area of the cavity.

In an alternative approach the heating device is an ultra-sonic heating device enabling a punctual heating. When using an ultra-sonic heating device the part of the heating devices causing the heat is in contact with the mold cavity wall when causing the heat and wherein the heating device is not driven by an actuator.

An actuator in this context is a mechanical device moving physically the heating device from and to the injection mold cavity wall.

In a third embodiment the heating devices for locally heating the injection mold cavity wall, comprises a section emitting the heat and which is not in contact with the mold cavity wall when not emitting heat and is in contact with the mold cavity wall when emitting the heat due to expansion of the material of the heating device and is not driven by a mechanical actuator. In a possible embodiment the housing or the heating device itself expands due to the activated heating process and establishes a contact with the area of the mold to be heated. When turning off the heating device the housing contracts and moves away from the mold cavity wall, to establish a gap between the heating device and the mold cavity wall.

In a preferred embodiment the heating device has a fixed position in relation to the injection mold cavity wall and is not moveable by a mechanical actuator when performing its operation. This fixed position is adjustable to optimize the gap between the heating device and the mold cavity wall. However, after adjusting the position the heating device remains in the fixed position. The adjustment and fixation can be performed by threads and nuts. For example, the heating device can be screwed by means of a thread into a pocket provided for the heating device. After adjusting the gap a lock nut is used to fix the position.

In a preferred embodiment the heating device is located in a pocket of the mold cavity wall, and wherein the section of the heating device emitting the heat is a tip of the heating device emitting the heat. The heating device is designed to fit into the pocket, especially the heat emitting part is located in the pocket.

In a preferred embodiment the pocket is a blind pocket, and the tip of the heating device emits heat in direction of the bottom of the blind pocket.

In a preferred embodiment the tip of the heating device is not in contact with the bottom of the blind pocket, so that a defined space between walls of the blind pocket and walls of the heating devices is established, especially in the section of the tip of the heating device. In this context the heat is emitted at the tip of the heating device.

In a preferred embodiment the heating device is located in a sleeve or a tube with a bottom which is located in the pocket. The sleeve or tub with a bottom can be fully or partially threaded to be adjusted in the pocket as discussed above. A flange at the end of the sleeve would be also possible to fix and adjust the heating device. In a preferred embodiment the sleeve is a cartridge which is designed to be easily exchangeable. This allows an exchange of a defect heater devices or to use different heater technologies as mentioned above in a mixed configuration or in a single technology configuration.

When using a mixed configuration a least two different heating device technologies emitting heat can be selected from: infrared heating device, laser heating device, arc heating device, induction heating, ultrasonic heating device, microwave heating device, spot heat cartridge/coil device, blue LED-light heating device, heat pipes, flame heating device which are installed to emit heat to the injection mold cavity wall.

Infrared heating is a method for heating materials that uses electromagnetic waves to transfer energy from the infrared source to the product without heating the air in between. The emitted infrared energy is between 0.7 microns (µ) and 6 µ. At peak efficiency, wavelengths are selected for the product to be heated to minimize energy usage.

Thermal energy is transferred directly to a material at a lower temperature. The surrounding air is not heated and is uninvolved in the transfer of heat, making infrared heaters energy efficient, convenient, and healthy. Power is supplied by electricity, natural gas, or propane to create heat efficiently and economically.

The electromagnetic waves in the infrared spectrum have a wide range of wavelengths, from 780 nm up to 10 microns for industrial processes. The shorter wavelengths in the infrared spectrum have higher frequencies and associated energies. Heat produced by infrared waves ranges from hundreds of degrees Celsius up to 6,512 °F (3,600 °C). "

Diese Seite erklärt sehr viele und recht gute Informationen. Aber es sprengt vermutlich den Rahmen des Patentes. Das gleich gilt auch für andere Wärmequellen die auf Basis elektromagnetischer Wellen funktionieren (welches leider nicht mein Fachgebiet ist).

The main principle is that dark and matt surfaces absorb radiation better than light and shiny ones. This can variegate depending on the frequency and kind of the electromagnetic wave and therefore the heat source as e.g. infrared energy has a different electromagnetic wave than blue light or laser.

The point is to use the good absorbers to receive the energy should be attached to the area where the energy is directed to and then guide it with a good heat conductive material to the area where the defects in the mold are expected.

Especially with infrared, blue light and lasers, the surface where the beam hits are important. So it's not just about the heat hitting a good heat conductor, but that suitable surfaces and materials are available when converting radiation into heat, for example. For example, an IR or laser beam is reflected by a mirror. Whereas a matt, black and rough surface converts the radiation better into heat. So depending on the technology the surface roughness or colour can be adapted.

In a preferred embodiment the injection mold cavity wall is made of a thermally conductive material with a higher conductivity than the surrounding material in the area where the section of the heating devices emitting the heat transfers the heat to the injection mold cavity. This approach allows to focus the heat to the area of interest especially to a limited area.

In a preferred embodiment the wall with a thermally conductive material with a higher conductivity is located at the bottom of the pocket and is abutting the cavity.

Also the wall of the heating device/sleeve/cartridge can be insulated or spaced apart to the mold wall to achieve a focus to the heat distribution especially a focus to the tip of the heating device.

It is also possible that wherein the sleeve internally comprises a high thermal conductive material which is designed to focus the heat to the tip of the heating device.

In an alternative or additive approach, the wall of the pocket is lined with a heat isolating material, lower inductive material and/or light reflective material, so that the heat is focused to the bottom of the pocket depending on the technology of the heating device

When applying a heating device using an inductive technology a post is located on to the injection mold cavity wall or at the bottom of the pocket being surrounded by an induction winding located in the heating device without being in contact with the post to establish the induction heating device.

In a preferred embodiment the post is made of an inductive sensitive material with a higher inductive sensitivity than the surrounding material in the injection mold cavity wall. Also the heat transfer can be better than of the surrounding material

In a possible embodiment when the heating device is an inductive heating device a nonmagnetic material is used as insulation. The nonmagnetic material can surround the magnetic material. It can be pressed into the pocket. For example it can be an ceramic or stainless steel sleeve.

In a possible embodiment wherein when the heating device is an arc heating device an arc is generated by high-voltage electric current between two or several small electrodes concentrated close to the area to be heated, to heat up the cavity wall. The electrodes which can be made of graphite for its semi-conductive properties heat up and create a plasma that can be directed to heat the injection mold cavity wall. The power has to be controlled carefully to avoid an overheating.

In a possible embodiment the cavity wall or the bottom of the pipe or cartridge or tube with a bottom around the heating source can be used as a second electrode (as Ground). In case of the pipe it can easily be electrically insulated against the mold but in a high thermal conductive material to conduct the heat from the arc to the cavity surface or its backside.

In a possible embodiment one or more heating devices for punctually heating the inner side of the cavity wall, which is in direct contact with the plastic material when injected, are used. Preferably the heating device is a spot heat cartridge heating device with an additional wall out of high thermal conductive material to lead the heat in direction to the tip. When using an infrared heating device in a sleeve, at the bottom of the sleeve where the infrared beam impinges on the ground the ground should have a infrared conductive surface and/or an additional wall out of high thermal conductive material is used to lead and focus the heat directly into the cavity. When using a laser heating device in a sleeve an additional wall at the bottom of the sleeve where the laser beam impinge on the ground the ground should have a laser heat conductive surface out of high thermal conductive material, to lead and focus the heat directly into cavity. When using an arc heating device in a sleeve an additional wall of high thermal conductive material is used to lead and focus the heat directly into cavity. When a punctual induction heating device is used high thermal conductive material is applied to lead heat directly into the cavity, wherein the heating devices emitting the heat is indirect elongated into the cavity when emitting the heat. When using a blue LED-light heating device in a sleeve an additional wall at the bottom of the sleeve where the blue light impinges on the ground the ground should have a blue light conductive surface out of high thermal conductive material to lead and focus the heat directly into cavity.

In a possible embodiment the injection mold comprising an injection mold cavity wall, comprises one or more heating devices for locally heating the injection mold or mold insert cavity wall or direct the cavity, wherein the heating device is insulated (e. g. with vacuum) or with distance to the mold wall except for the tip side to the cavity where the heat should be applied and or has a reflecting material around to not heat up the mold in areas where it is not requested or has non magnetic materials around in case of the inductive heater and only in the tip area to the cavity a high inductive material is applied to lead the heat directly to the area of the plastic part that needs to be improved.

### Brief Description of Drawings

In the following drawings of embodiments of the invention will be briefly described:
Fig. 1 shows several heating devices which are located in one or several pockets close to areas to be heated in a mold;
Fig. 2 shows several heating devices which are located in pockets heating opposite areas of a mold, so that the plastic is heated from two opposite sides;
Fig. 3 shows several heating devices which are located in pockets heating adjacent angled areas of a mold, so that the plastic is heated at different angles;
Fig. 4 shows several heating devices which are located in pockets, wherein the heating devices are using infrared or LED-blue light heating;
Fig. 5 shows several heating devices which are located in pockets, wherein the heating devices are isolated around the out wall to focus the heat to the tip of the heating device in a cartridge;
Fig. 6 shows several heating devices which are located in pockets, wherein one of the heating cartridges is not in contact with the mold wall when not heating, whereas the others are in contact due to expansion when heating;
Fig. 7 shows several heating devices wherein the heating devices are using laser heating;
Fig. 8 shows several heating devices wherein the heating devices are using laser heating and an isolation around the heating device to focus the heat to the tip in a cartridge;
Fig. 9 shows several heating devices wherein the heating devices are using arc heating;
Fig. 10 shows several heating devices wherein the heating devices are using arc heating and an isolation around the heating device to focus the heat to the tip in a cartridge;
Fig. 11 shows several heating devices wherein the heating devices are using inductive heating;
Fig. 12 shows several heating devices wherein the heating devices are using inductive heating, wherein the heat emitting parts are in direct contact to the cavity and in direct con tact to the plastic;
Fig. 13 shows a single squared or other oblong formed heating devices wherein the heating device is using inductive heating;
Fig. 14 shows a single squared heating devices wherein the heating device is using inductive heating and extends into the cavity and is in direct contact with the plastic material;
Fig. 15 shows the possibility to dive into the mold with different heating sources when the heating source is built into a cartridge;
Fig. 16 shows different possible positions of the heat source depending on the position of the surface defect or area to improve with a heat impulse.

### Detailed Description of possible Embodiments

In the following embodiments shown in the Figs. are discussed, without the intention to limit the scope of protection of the claims.

The heating devices in the Figures are only an example of a possible number of heating devices. A possible number ranges from 1 to n heating devices, wherein n is an integer.

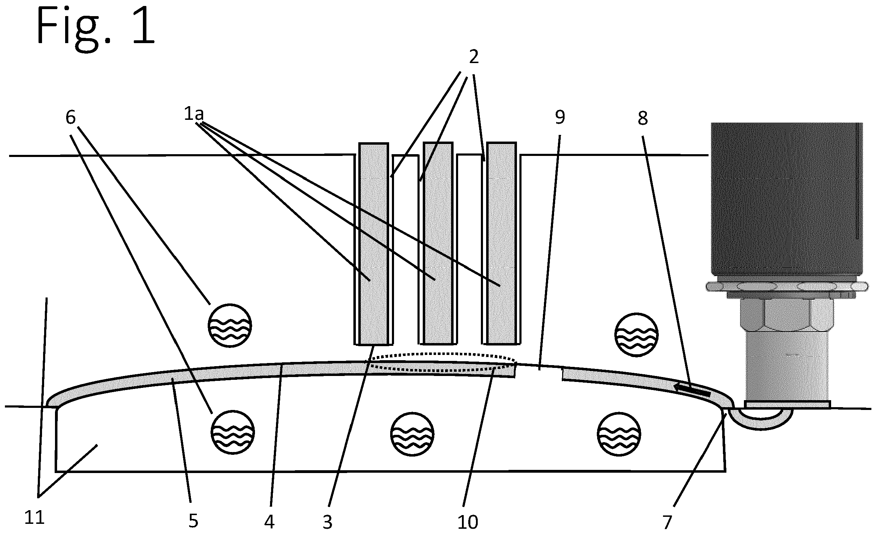

Fig. 1 shows a sectional view of a mold or cavity insert 11 defining a cavity 5 in which plastic is injected and formed. The plastic flows 8 from an injection point 7 using one or several injectors into the cavity 5. In the example of Fig. 1 a protrusion on core or injection side 9 is located in the cavity 5. The protrusion on core or injection side 9 is a kind of a barrier where fluid e.g. plastic has to flow around. The protrusion on core or injection side 9 causes an uneven distribution of the plastic and weld lines, when the plastic joins after separation by the protrusion on core or injection side 9. Object of the invention is to improve the appearance of the weld lines in the area 10 where surface defects are expected. Especially the right temperature at the right time exactly at the right place of the cavity helps to avoid weld lines, flow lines or matt points in the gate area. The invention enables the realization of delicate geometries and microstructures, supports the flow through areas of low wall thickness, such as in film hinges or thin-wall molding, enables the implementation of top-quality design surfaces.

In the area 10 where the weld lines can be expected several heating devices 1a are located in pockets extending into the mold or a mold insert. The heat of the heating devices is emitted at the lower tip pointing to the cavity. The tip of the heating devices is not in contact with the injection mold cavity wall 4. However, the heat emitted by the heating device is transmitted via the injection mold cavity wall to the plastic in the cavity so that the plastic is heated and the appearance of the weld is improved or eliminated. In a preferred embodiment the heating elements are round sleeves that fit into the pockets. They can have threads and nuts to be locked into position. Also the pockets can be threaded or partially threaded to hold the heating elements in place. Between the lateral wall of the pockets and the lateral walls of the heating elements can be an air or insulating gap 2, which improves to focus the heat to the tip of the heating element. The gap can also be filled with insulating and or reflecting materials.

Also it is possible in an embodiment that the heating devices or the area 10 are fitted with temperature sensors to control the heating devices, especially an individual control of the heating devices can be applied.

As mentioned above different technologies for the heating devices can be used. Also a mix of different technologies is possible. The location, the angle, the distance to the cavity or the distance to the neighboring heating device can be controlled.

To control the heat of the injection mold cavity walls cooling or tempering lines/pipes/pockets 6 are used which extends through the injection mold cavity walls.

A possible temperature controller (not shown) can control the cooling fluid in the tempering lines 6, the standard heating elements (not shown) and/or the punctual heating elements as disclosed in the application to optimize the temperature of the injection mold cavity walls. The controller can also be connected to the temperature sensors detecting the temperature.

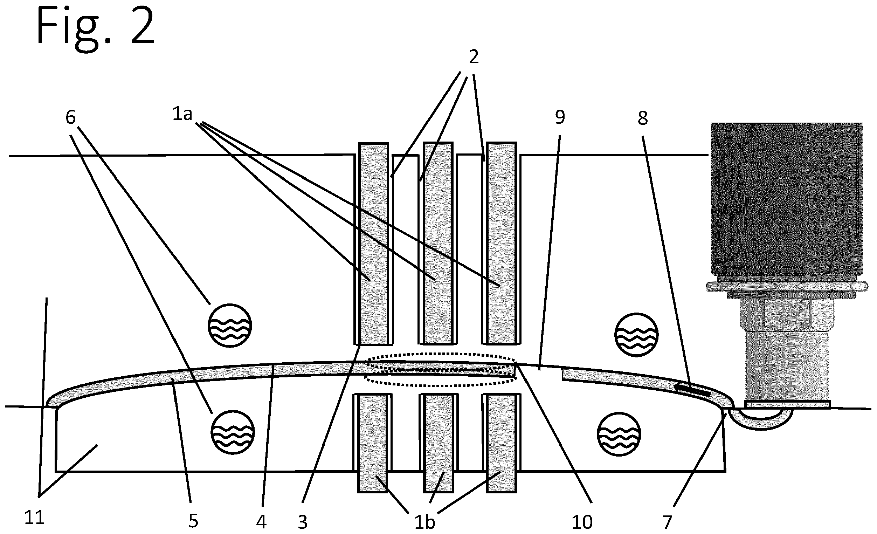

Fig. 2 shows several heating devices 1a and 1b which are located in pockets and are heating opposite areas of the cavity 5, so that the cavity surface and indirect the flowing by plastic is heated from two opposite sides. The heating devices 1a heat from the top. The heating devices 1b heat from the bottom to improve the quality of the plastic weld e. g. on transparent parts.

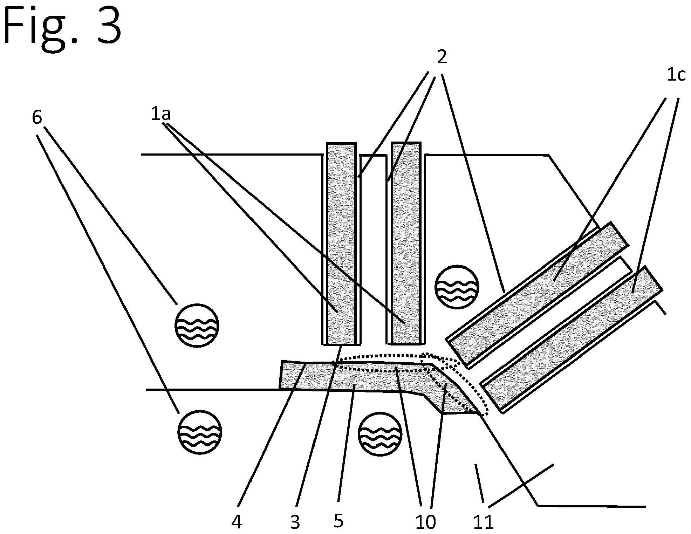

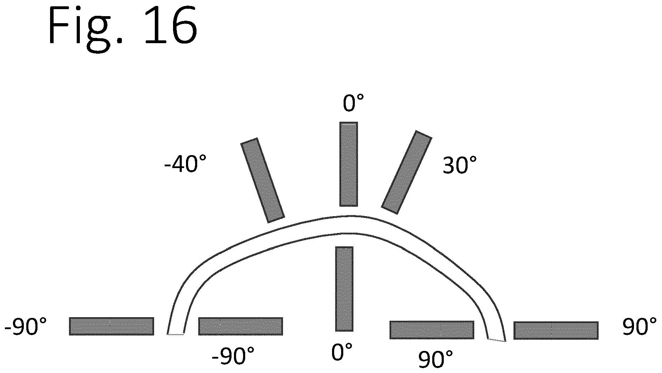

Fig. 3 shows several heating devices 1a, 1c which are located in pockets heating adjacent angled or round areas of the cavity 5, so that the plastic is heated from different angles. The first set of heating devices 1a extend from the top and the second set of heating devices 1c extends oblique from the top preferable in a right angle to the surface of the cavity. The angle between the first set and the second set is determined by the angle of the sections in the cavity. The angle can be between- -90 degrees to 90 degrees from each cavity side. Fig. 16 shows a similar concept showing alternative positions which can be alternative or in combination from the top or the bottom.

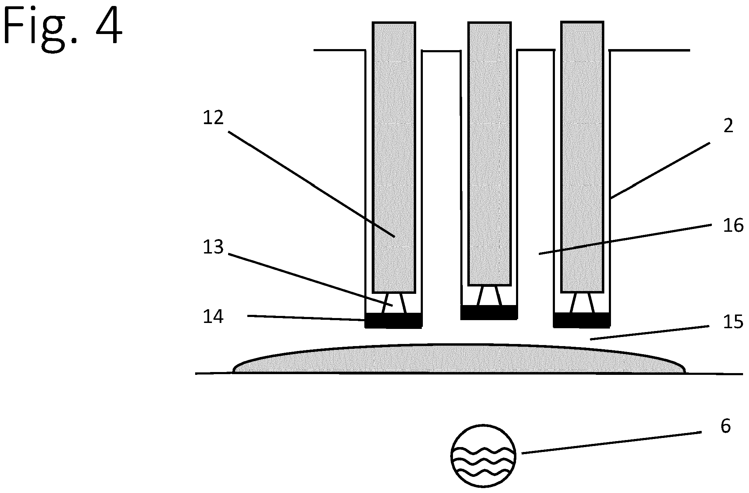

Fig. 4 shows several heating devices 12 which are located in pockets, wherein the heating devices are using infrared or blue / ultraviolet light heating.

The elements 12 in the pocket can be a light guide or optical fiber or the infrared or blue / ultraviolet light source itself, which emits at the tip an infrared or blue / ultraviolet light beam 13 onto an infrared or blue / ultraviolet light sensitive material and or surface 14, which heats up fast when an infrared or blue / ultraviolet light source is focused or directed on. Alternative embodiments without the sensitive material are also possible. Between the cavity and the end of the pocket is a wall 15, which is located between the heated spot and cavity. The thickness of the wall can be different or equal distance depending on requirements of the part surface.

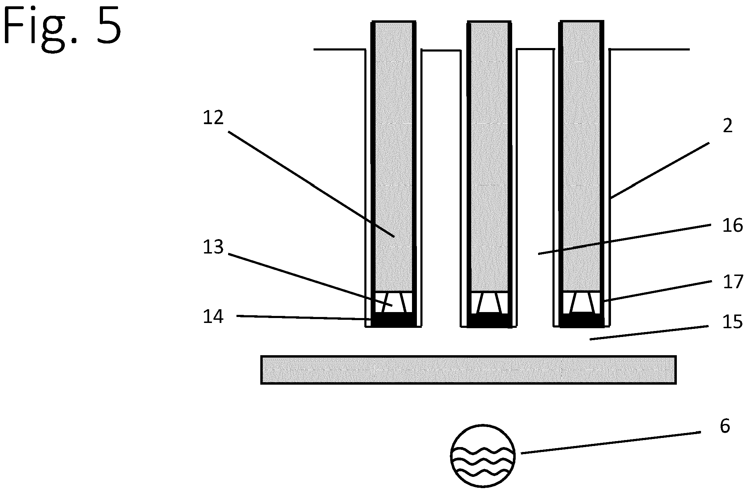

Fig. 5 shows several heating devices which are located in pockets, wherein the heating devices are sheltered and could be isolated around the outer wall to focus the heat to the tip of the heating device. The wall 16 between heating devices can be designed according to the requirements of the part surface. The distance and the position of the sources can be flexible but need to be as small (close) as necessary to bring enough heat via conduction in the concerned cavity area 15 where defects 10 are expected or heat is necessary to improve surface problems like detailed structure or dull areas or as flow support in a thin part area. In a possible embodiment the heating devices have a distance (wall to wall) between 0,01-7 cm.

In possible embodiment the heating devices 17 are fixed in a pipe or housing or cartridge for easier adjustment and fixation in the pocket. The pipe could have a vacuum inside for optimal insulation or other isolation material or a sufficient gap which enable the device to focus the heat to the tip and avoid heat spreading out around the heating devices.

Not only in this context the heating devices that can be switched individually or in groups or depending on a predefined heat schedule.

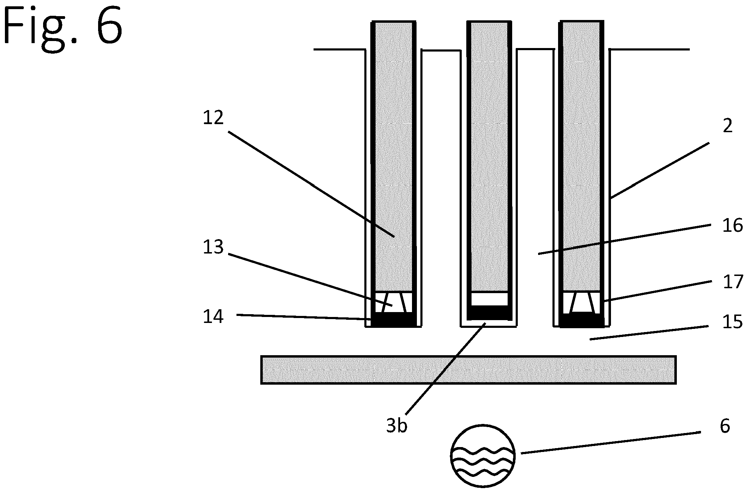

Fig. 6 shows several heating devices which are located in pockets, wherein the heating devices are not in contact with the mold wall when not heating, but are in contact due to expansion when heating. Due to temperature expansion, the heat transfer point is full or preloaded and lifts off very slightly or has less pressure when no temperature is applied. Hereby the cooling effect after the heating period is better, and there is no actuator necessary, to establish the gap.

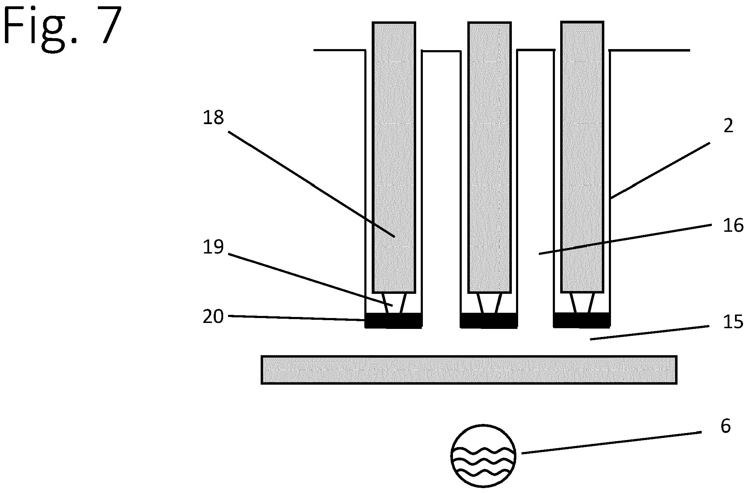

Fig. 7 shows several heating devices 18 wherein the heating devices are using laser heating. In the pocket there can be the laser source itself or light guiding elements that transfer the laser beam from outside the pocket to the tip of the heating element. In this context a single laser source can be used outside of the pockets to provide the laser beam to several heating devices. At the tip of the heating device a laser beam 19 is emitted which preferably hits after traversing a gap a preferably laser sensitive material and or surface 20, which heats up faster when the laser is hitting the material in comparison to the material surrounding the heating device.

The laser sensitive material can be located at the bottom of the pocket. In a possible embodiment the material can be pressed into the pocket.

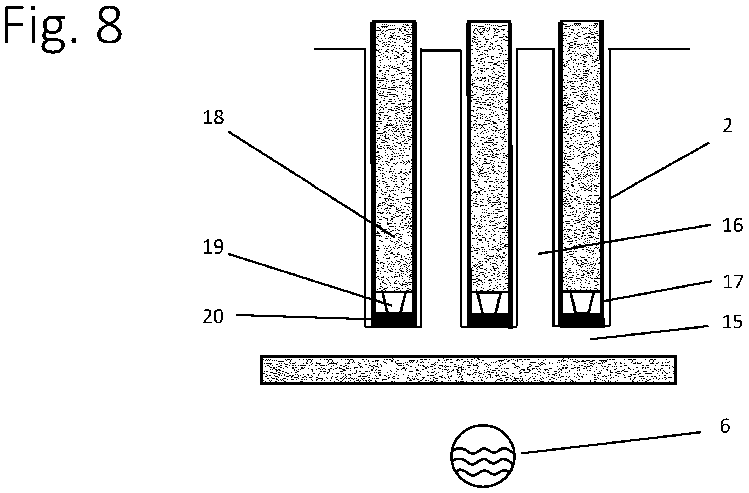

Fig. 8 shows several heating devices wherein the heating devices are using laser heating and a sheltering sleeve that could be isolation around the heating device to focus the heat to the tip. The isolation can be an optical reflector or heat isolation. Furthermore, the heating device can be an independent unit in a sleeve or pipe or housing or cartridge, being removable fixed in the pocket. This can be implemented by threaded elements for easier adjustment and fixation.

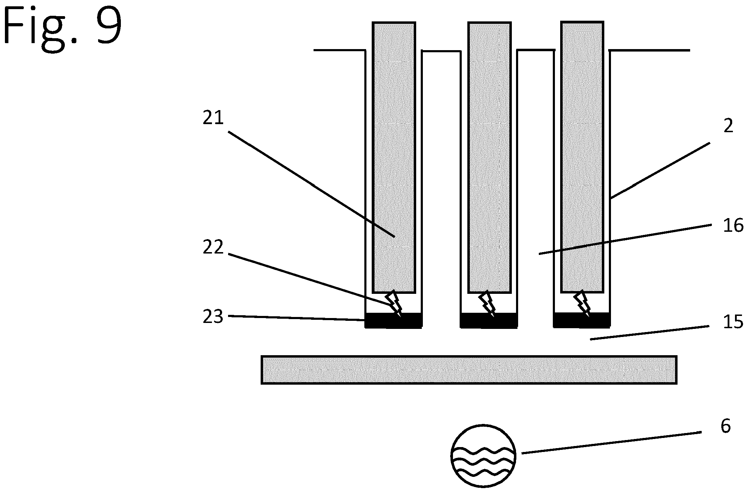

Fig. 9 shows several heating devices wherein the heating devices are using arc heating technology. Cables 21 are guided into the pocket and an arc 22 is emitted at the tip of the heating device. At the bottom of the pocket an arc resistant high heat conductivity material 23 e. g. as second electrode is located.

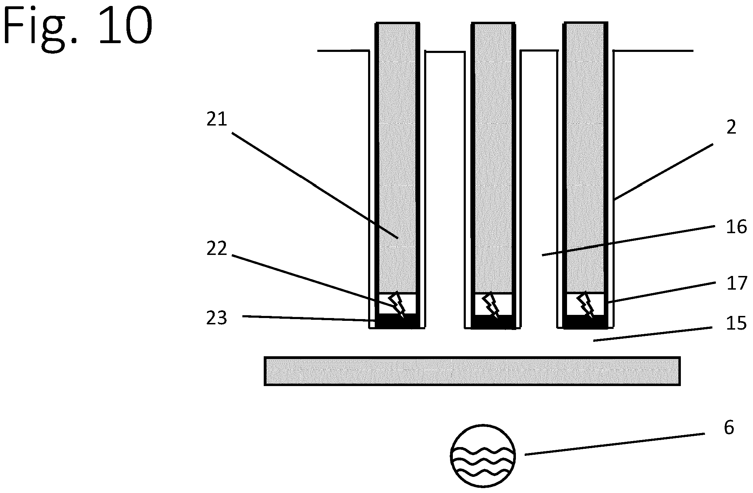

Fig. 10 shows several heating devices wherein the heating devices are using arc heating and sheltering sleeve that could be isolation around the heating device to focus the heat to the tip. The isolation can be an electrical or heat isolation.

Furthermore, the heating device can be an independent unit in a sleeve or pipe or housing or cartridge, being removable fixed in the pocket. This can be implemented by threaded elements for easier adjustment and fixation. At the bottom of the cartridge an arc resistant high heat conductivity material 23 e. g. as second electrode is located. Else also electric wires can be used between their end the spark is ignited and spends heat to the bottom of the cartridge,

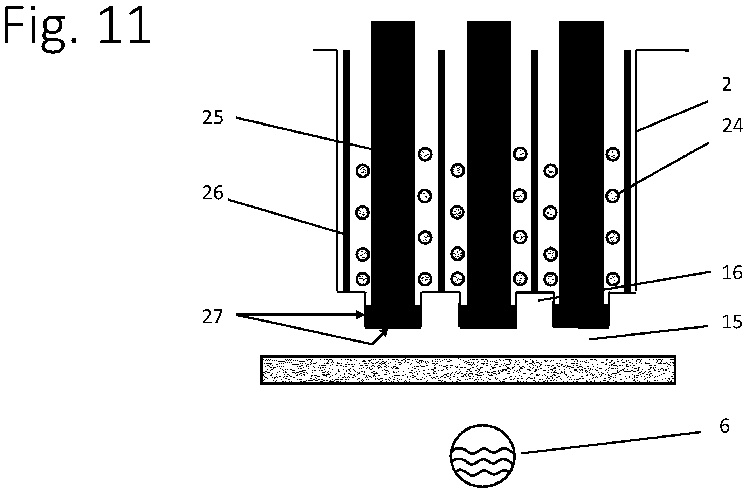

Fig. 11 shows several heating devices wherein the heating devices are using inductive heating. An induction coil or coils 24 are located in the pocket. High inductive sensitive material 25 is located in the center of the pocket surrounded by the induction coils and extends to the bottom of the pocket. At the bottom of the pocket the inductive sensitive material 25 is in contact which the wall 15 to transfer the heat into the cavity. In a preferred embodiment the heat reflecting material and surface 26 surrounds the induction coils. The contact area 27 of the inductive sensitive material 25 is the mold or insert and the cavity contact is only in bottom area of the pocket close to cavity and possibly partially around only in tip area. The inductive sensitive material can be built as a post that is fixed in the mold or mold insert.

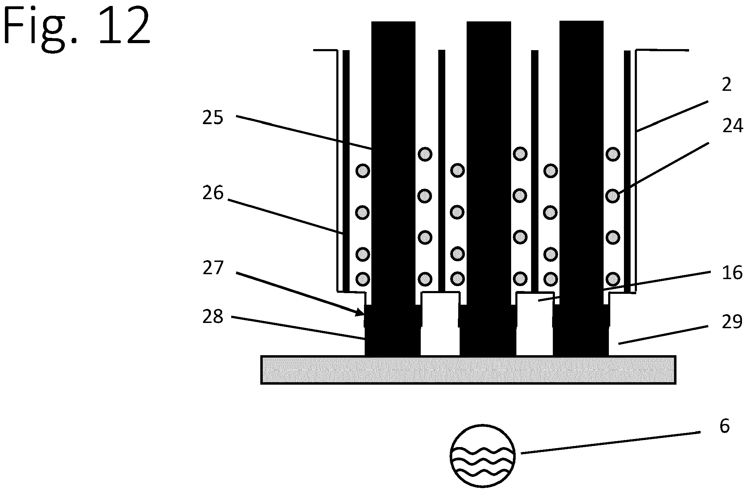

Fig. 12 shows several heating devices wherein the heating devices are using inductive heating as in Figure 11, wherein the heat emitting parts are in direct contact with the cavity and

in direct contact to the plastic. The high thermal conductive material 28 leads heat direct into cavity.

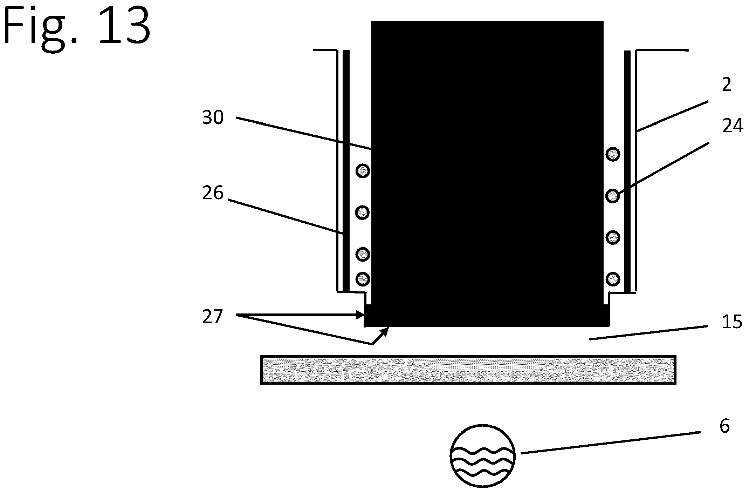

In Comparison to Fig. 11 and 12, Fig. 13 and 14 show a single heating devices wherein the heating device is using inductive heating. The size of the heating device can vary. Also the shape of the heating block 30 can be round, square, triangle, polygon, oblong surface to heat complete line or area etc. or other desired shapes. The heating device 29 can be fixed installed or can be removable attached. The contact area 27 of the inductive sensitive material 30 is the mold or mold insert and the cavity contact is only in bottom area of the pocket close to cavity and possibly partially around only in tip area. The inductive sensitive material can be built as a post that is fixed in the mold or mold insert.

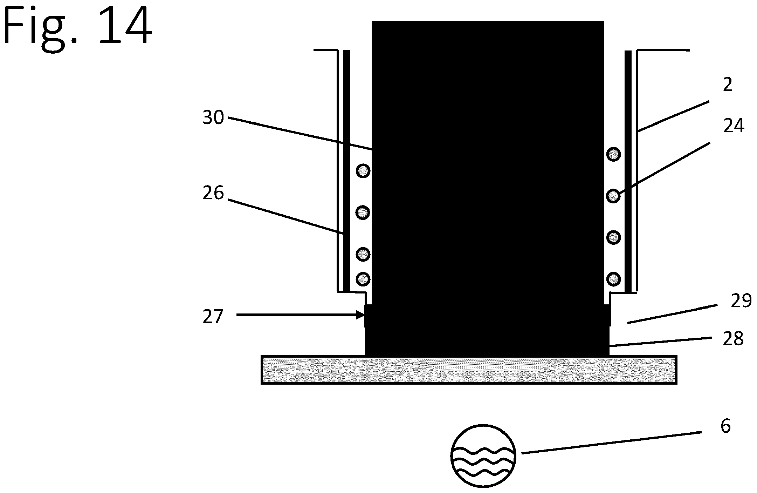

Fig. 14 shows a single block of a heating devices wherein the heating device is using inductive heating and extends into the cavity and is in direct contact with the plastic material. A single stamp of the high thermal conductive material 28 leads the heat directly into the cavity. The heating device can be removable. Also the shape of the heating block 30 can be round, square, triangle, polygon, oblong surface to heat complete line or area etc. or other desired shapes.

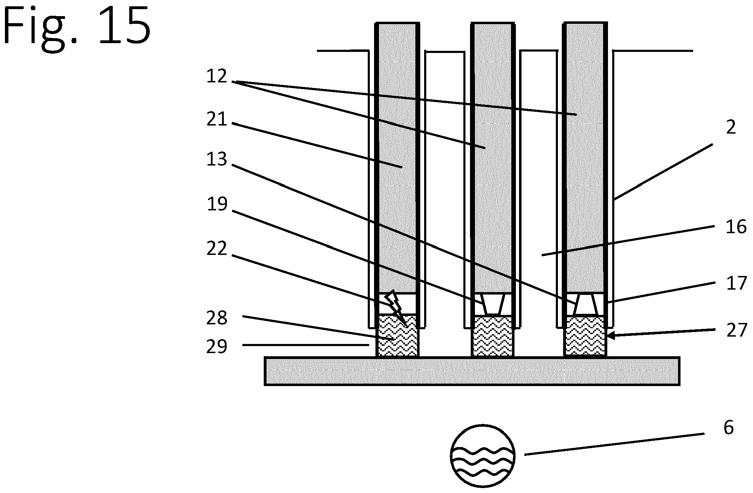

Fig. 15 shows different heating devices all mounted in a tube with a bottom that extends into the cavity and is in direct contact with the plastic material. The heating devices can be infrared heating device, laser heating device, arc heating device, induction heating device, heat pipe, Light heating device, LED-light heating device, preferably blue LED-Light heating device, microwave heating device, spot heat cartridge device.

The heat conducting element (Fig. 11-14, the part that is surrounded by the induction coil and is heated up) that is heated up by the heating device can have contact with the mould. It can even dip into the cavity when it becomes dense and would therefore have direct contact with the plastic flowing past (Fig. 12 and Fig. 14).

If the heating device is housed in a tube/sleeve/cartridge, then this also applies inside the tube (no contact at the front of the tube), but the tube itself can have contact with the mold (cavity) at the front or, in an extended version, it could also dip through into the cavity and thus have contact with the plastic flowing past at the front.

### List of Reference Numerals

1a heating devices or energy transferring equipment from injection side (fixed side)
1b heating devices or energy transferring equipment from moving side
1c heating devices or energy transferring equipment from different positions possible to better follow the contour of the cavity or avoid collision with tempering lines or other bothering parts like ejectors in the mold
2 Air or insulating gap
3 Frontal contact of heating device with cavity
3b Switched off heating device which then has no contact or contact with lower pressure to the
4 injection mold cavity wall
5 Cavity (or plastic part in cavity when cavity is filled)
6 Cooling or tempering lines
7 Injection point
8 Flow direction of fluid plastic or metal
9 Protrusion on core or injection side (barrier where fluid plastic or fluid metal has to flow around)
10 Area where surface defects are expected (weld line, dull areas, micro structure, flow support)
11 Mold or cavity insert
12 Light guide (or optical fiber) or infrared / blue light source
13 Infrared beam or blue light beam
14 Infrared sensitive material and or surface (heats up fast when infrared source is on)
15 Wall between heated spot and cavity (can be different but equal distance to the part surface is better)
16 Wall between heating devices ...)
17 Heating devices fixed in a pipe or sleeve or tube with a botton, cartridge or housing (for easier adjustment and fixation) ;
18 Light guide (or optical fiber) or laser source
19 Laser beam
20 Laser sensitive material and or surface (heats up fast when laser source is on)
21 Cable / Cables
22 Arc
23 Arc resistant high heat conductivity material e. g. as second electrode
24 Induction coil or coils
25 High inductive sensitive material
26 Heat reflecting material and surface
27 Mold or insert and or cavity contact only in front area close to cavity
28 High thermal conductive material to lead heat direct into cavity
29 Fixed in cavity
30 Inductive heated block e. g. (squared) rectangle or oblong surface to heat complete line or area

## Claims

1. Injection mold comprising an injection mold cavity wall, comprising one or more heating devices for locally heating the injection mold or mold insert cavity wall,
wherein the heating device is selected from one or more of the following: infrared heating device, laser heating device, arc heating device, induction heating device, microwave heating device, blue light or LED-light heating device and wherein a section of the heating devices emitting the heat is spaced apart from the mold cavity wall when emitting the heat.

2. Injection mold comprising an injection mold cavity wall, comprising one or more heating devices for punctually heating the injection mold or mold insert cavity wall having a cavity wall back side,
wherein the heating device is an ultra sonic heating device; or an infrared heating device, laser heating device, arc heating device, induction heating device, microwave heating device, blue light or LED-light heating device each in a pipe or sleeve with a bottom;
and wherein the heating devices emitting the heat or the sleeve with a bottom is in contact with the mold cavity wall when emitting the heat and wherein the heating device to gain contact with the cavity wall back side or mold insert cavity wall having a cavity wall back side is not driven by an actuator.

3. Injection mold comprising an injection mold cavity wall, comprising one or more heating devices for locally heating the injection mold cavity wall or mold insert cavity wall having a cavity wall back side,
wherein a section of the heating devices emitting the heat is not in contact with the mold cavity wall when not emitting heat and is in contact with the mold cavity wall when emitting the heat due to expansion of the material of the heating device and is not driven by an mechanical actuator.

4. Injection mold according to one of the preceding claims 1 or 2 or 3, wherein the heating device has a fixed position in relation to the injection mold cavity wall and is not moveable by a mechanical actuator when performing its operation.

5. Injection mold according to one of the preceding claims wherein the heating device is located in a pocket of the mold cavity wall, and wherein the section of the heating device emitting the heat is a tip of the heating device emitting the heat and preferably
wherein the pocket is a blind pocket, and wherein the tip of the heating device emits heat in direction of the bottom of the blind pocket.

6. Injection mold according to one of the preceding two claims wherein the heating device is located in a sleeve or a tube with a bottom which is located in the pocket and preferably wherein the sleeve is a cartridge which is designed to be easily exchangeable, and
preferably wherein the cartridge has at least one adjustment element, preferably a thread, allowing to adjust the position in the pocket and the distance of the tip of the heating device to the mold cavity wall or mold insert cavity wall having a cavity wall back side.

7. Injection mold according to the preceding claim 1, 3-6, wherein the tip of the heating device is not in contact with the bottom of the blind pocket, so that a defined space between walls of the blind pocket and walls of the heating devices is established, especially in the section of the tip of the heating device.

8. Injection mold according to one of the preceding claims, wherein the injection mold cavity wall has thermally conductive material with a higher conductivity than the surrounding material in the area where the section of the heating devices emitting the heat transfers the heat to the injection mold cavity and preferably
wherein the wall with a thermally conductive material with a higher conductivity is located at the bottom of the pocket and is abutting the cavity an preferably wherein the thermally conductive material builds a wall of the injection mold cavity, so that the plastic in the injection mold cavity is in contact with thermally conductive material.

9. Injection mold according to one of the preceding claims, wherein at least two different heating device technologies emitting heat selected from: infrared heating device, laser heating device, arc heating device, induction heating, ultrasonic heating device, micro wave heating device, spot heating cartridge, heat pipe, blue or ultraviolet light or LED-light heating device are installed to emit heat to the injection mold cavity wall.

10. Injection mold according to one of the preceding claims, wherein a post is located on to the injection mold cavity wall or at the bottom of the pocket being surrounded by an induction winding located in the heating device without being in contact with the post, to establish the induction heating device, and preferably
wherein parts of the post builds a wall of the injection mold cavity, so that the plastic in the injection mold cavity is in contact with the post, and preferably wherein the post is made of inductive sensitive material with a higher inductive sensitivity than the surrounding material in the injection mold cavity wall.

11. Injection mold according to one of the preceding claims, wherein the wall of the cartridge or the pocket is lined with a heat isolating material, lower inductive material and/or light reflective material, so that the heat is focused to the bottom of the pocket.

12. Injection mold according to one of the preceding claims, wherein the heating device is insulated or spaced apart to the mold wall so that heat is focused to the tip of the heating device, preferably wherein when the heating device is an inductive heating device non magnetic materials are used as insulation.

13. Injection mold according to one of the preceding claims, wherein in an arc heating device an arc is generated by high-voltage electric current between two or several small electrodes concentrated close to the area to be heated, to heat up the cavity wall.

14. Injection mold according to one of the preceding claims, wherein the sleeve comprises a high thermal conductive material focussing the heat to the tip of the heating device.

15. Injection mold according to one of the preceding claims, wherein punctual area to be heated ranges from 4mm2 to 10 100 cm2.Injection mold according to one of the preceding claims, wherein a least one temperature sensors is located in the heating device or in the cavity wall near to the heating device, to allow the heating elements and the heat transferred into the cavity wall to be controlled.
